Europäisches Patentamt

European Patent Office

Office européen des brevets

(11) Numéro de publication: **0 187 078**
**B1**

(12) **FASCICULE DE BREVET EUROPEEN**

(45) Date de publication du fascicule du brevet:
**24.05.89**

(51) Int. Cl.⁴: **F25B 21/00**

(21) Numéro de dépôt: **85402388.4**

(22) Date de dépôt: **03.12.85**

(54) Dispositif de réfrigération ou de pompage de chaleur.

(30) Priorité: **18.12.84 FR 8419354**

(43) Date de publication de la demande:
**09.07.86 Bulletin 86/28**

(45) Mention de la délivrance du brevet:
**24.05.89 Bulletin 89/21**

(84) Etats contractants désignés:
**CH DE GB IT LI NL**

(56) Documents cités:
**EP-A- 0 081 411**
**EP-A- 0 104 713**
**EP-A- 0 170 364**
**FR-A- 2 383 410**
**FR-A- 2 525 748**
**FR-A- 2 548 339**
**US-A- 2 913 881**
**US-A- 3 108 444**
**US-A- 3 125 861**
**US-A- 3 393 526**
**US-A- 4 033 734**
**US-A- 4 332 135**

**CRYOGENICS,**
**vol. 20, no. 8, août 1980, pages 467-471, IPC Business**
**Press, Guilford, GB; J.A. BARCLAY: "A 4 K to 20 K**
**rotational-cooling magnetic refrigerator capable**
**of 1mW to 1W operation"**

(73) Titulaire: **COMMISSARIAT A L'ENERGIE ATOMIQUE,**
**31/33, rue de la Fédération, F-75015 Paris(FR)**

(72) Inventeur: **Beranger, Robert, 9 Clos de Franguières**
**Biviers, F-38330 St Ismier(FR)**
Inventeur: **Claudet, Gérard, 20 rue Edouard Vaillant,**
**F-38100 Grenoble(FR)**
Inventeur: **Lacaze, Alain, 107, cours Jean Jaurès,**
**F-38100 Grenoble(FR)**
Inventeur: **Lacaze, Ambert, 4 Allée des Marronniers,**
**F-38240 Meylan(FR)**

(74) Mandataire: **Mongrédien, André et al, c/o**
**BREVATOME 25, rue de Ponthieu, F-75008 Paris(FR)**

## Description

La présente invention concerne un dispositif de réfrigération ou de pompage de chaleur. Cette invention s'applique à la réfrigération, notamment à très basse température, ainsi qu'au pompage de chaleur.

On sait que la réfrigération ainsi que le pompage de chaleur nécessitent des installations semblables. Dans le pompage de chaleur, on utilise la partie de l'installation qui cède de la chaleur à température élevée, au milieu ambiant ou à un autre corps. Dans la réfrigération, on utilise au contraire la partie de l'installation qui absorbe, à basse température, de la chaleur du milieu ambiant ou d'un autre corps.

On sait aussi que la réfrigération ainsi que le pompage de chaleur, peuvent être mis en oeuvre à partir d'un dispositif fonctionnant selon un cycle thermodynamique dans lequel une certaine quantité de chaleur $Q_2$ est empruntée à une source froide à une température $T_2$, tandis qu'une autre quantité de chaleur $Q_1$ est restituée à une source chaude à une température $T_1$ supérieure à $T_2$. Le cycle thermodynamique le plus classique dans la réfrigération ou le pompage de chaleur, est le cycle de Carnot.

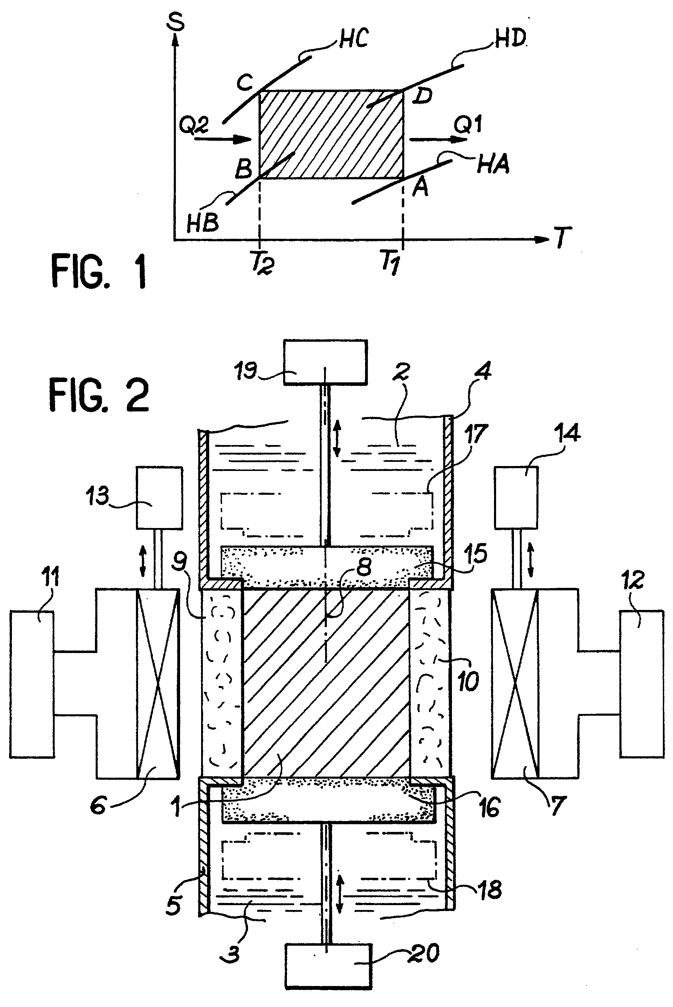

Dans un dispositif de réfrigération ou de pompage de chaleur connu, ce cycle peut être mis en oeuvre par un élément de substance paramagnétique placé entre une source froide à la température $T_2$ et une source chaude à la température $T_1$, et par des moyens magnétiques agissant sur la substance paramagnétique. Ce cycle est représenté sur la figure 1 qui est un diagramme de Carnot dans un repère entropies, température T et comporte :

- une désaimantation adiabatique (qui s'effectue sans échange de chaleur avec l'extérieur) de la substance, le champ magnétique passant d'une première valeur $H_A$ à une seconde valeur $H_B$, inférieure à la première valeur $H_A$, la substance passant de la première température $T_1$ de la source chaude, à la seconde température $T_2$ de la source froide, inférieure à la première température $T_1$.
- une désaimantation isotherme de la substance, à la seconde température $T_2$ (source froide), le champ magnétique passant de la seconde valeur $H_B$ à une troisième valeur $H_C$ inférieure à la seconde valeur $H_B$. Au cours de cette désaimantation isotherme une quantité de chaleur $Q_2$ est enlevée par la substance paramagnétique à la source froide, et on sait que $Q_2 = T_2 (S_C-S_B)$, $S_C$ et $S_B$ étant les entropies respectives aux points C et B.
- une aimantation adiabatique de la substance, le champ magnétique passant de la troisième valeur $H_C$ à une quatrième valeur $H_D$ supérieure à la troisième valeur $H_C$, la substance passant de la deuxième température $T_2$ (source froide), à la première température $T_1$ (source chaude).
- une aimantation isotherme de la substance, à la première température $T_1$ (source chaude), le champ magnétique passant de la quatrième valeur $H_D$ à la première valeur $H_A$. Au cours de cette aimantation isotherme, une quantité de chaleur $Q_1$ est cédée par la substance paramagnétique à la source chaude et

on sait que $Q_1 = T_1 (S_D-S_A)$, $S_D$ et $S_A$ étant les entropies correspondant aux points D et A.

En fait, durant le parcours de ce cycle, les échanges d'énergie avec l'extérieur sont les suivants : Echange de quantités de chaleur $Q_1$ et $Q_2$. Echange de travail au cours des quatre transformations AB, BC, CD, DA. Le travail total W échangé au cours du cycle est donné par la relation:
$$W = Q_1-Q_2.$$

Le cycle de Carnot est difficile à mettre en œuvre dans les installations de réfrigération ou de pompage de chaleur, à cause des problèmes posés par les échanges de chaleur entre les sources chaude et froide et la substance frigorifique. En fait, l'inconvénient essentiel résultant de ces problèmes est le très faible rendement des installations de réfrigération ou de pompage de chaleur. C'est le cas par exemple des installations décrites dans les brevets EP-A 0 104 713 et FR-A 2 525 748. C'est le cas aussi du réfrigérateur décrit dans le document US-A 3 108 444 dans lequel la substance paramagnétique présente une structure en anneau constitué de tranches de substance paramagnétique thermiquement isolées les unes des autres. Le rendement de ce réfrigérateur est faible car il ne comporte pas de clapets pour contrôler les transfers de chaleur entre la source froide et la substance paramagnétique et entre la source chaude et l'élément de substance paramagnétique.

La présente invention a pour but de remédier à ces inconvénients et notamment de réaliser un dispositif de réfrigération ou de pompage de chaleur, utilisant des moyens magnétiques agissant sur un élément de substance paramagnétique, ce dispositif fonctionnant de manière cyclique selon un cycle de Carnot et présentant un rendement bien supérieur à celui de toute installation connue. Ces buts sont atteints, comme on le verra plus loin en détail, grâce à l'utilisation de clapets intervenant, d'une part entre la source froide et l'élément de substance paramagnétique et, d'autre part, entre la source chaude et l'élément de substance paramagnétique et grâce à une structure en anneau de la substance paramagnétique et d'un mouvement relatif de rotation entre l'anneau et les moyens magnétiques.

L'invention a pour objet un dispositif de réfrigération ou de pompage de chaleur comprenant:

— un élément de substance paramagnétique placé entre une source froide et une source chaude et présentant un axe,
— des moyens magnétiques produisant dans l'élément un champ variable pour provoquer une désaimantation adiabatique de la substance paramagnétique, le champ magnétique passant d'une première valeur $H_A$ à une seconde valeur $H_B$ inférieure à la première valeur, la substance passant d'une première température $T_1$ à une seconde température $T_2$ inférieure à la première température, puis pour provoquer une désaimantation isotherme de la substance, à la seconde température $T_2$, le champ passant de la seconde valeur $H_B$ à une troisième valeur $H_C$ inférieure à la seconde valeur, puis pour aimanter adiabatiquement la substance, le champ magnétique passant de la troisième valeur $H_C$ à une quatrième valeur $H_D$ supérieure à la troisième valeur, la substance passant de la deuxième température $T_2$ à la première température $T_1$, puis pour aimanter la substance de façon isotherme à la première température $T_1$, le champ magnétique passant de la quatrième valeur $H_D$, à la première valeur $H_A$, l'élément de substance paramagnétique, la source froide et la source chaude étant disposés le long de l'axe, le dispositif comportant en outre des clapets, situés respectivement entre la source froide et l'élément de substance paramagnétique, et entre la source chaude et l'élément de substance paramagnétique, ces clapets étant fermés pendant la désaimantation et pendant l'aimantation adiabatique. Le clapet chaud étant fermé et le clapet froid ouvert pendant la désaimantation isotherme de la substance, le clapet chaud étant ouvert et le clapet froid fermé pendant l'aimantation isotherme de la substance (par clapet chaud on entend le clapet côté source chaude, et par clapet froid celui situé côté source froide).

Le dispositif est caractérisé en ce que l'élément de substance paramagnétique a la forme d'un anneau dont l'axe constitue ledit axe et qui est constitué de tranches de substance paramagnétique thermiquement isolées les unes des autres, les moyens magnétiques étant situés en regard d'au moins une partie de l'anneau de substance paramagnétique et des moyens pour produire un mouvement de rotation des moyens magnétique autour dudit axe si l'anneau occupe une position fixe, ou pour produire un mouvement de rotation de l'anneau autour dudit axe si les moyens magnétiques occupent une position fixe, les clapets (35, 40) étant constitués par des éléments de substance thermiquement isolante agencés pour se trouver périodiquement en regard des extrémités des tranches (23) de substance paramagnétique de telle sorte que les tranches (23) sont ainsi en contact périodique avec la source chaude et la source froide.

Selon une autre caractéristique, la source chaude est constituée par un fluide "chaud" à la première température $T_1$, ce fluide étant contenu dans un réservoir supérieur placé au-dessus de l'élément de substance paramagnétique, de manière que le fluide chaud soit au contact de l'élément de substance paramagnétique lorsque le clapet supérieur est ouvert, et en ce que la source froide est constituée par un fluide "froid" contenu dans un réservoir inférieur placé en-dessous de la substance, de manière que le fluide froid soit au contact de l'élément lorsque le clapet inférieur est ouvert.

Selon une autre caractéristique, l'anneau étant fixe, le clapet supérieur comprend un disque supérieur thermiquement isolant, en contact avec le fluide chaud, relié à des moyens d'entraînement en rotation et présentant au moins une ouverture en regard des moyens magnétiques, la rotation de ce disque supérieur étant synchrone de la rotation des moyens magnétiques.

Selon une autre caractéristique, le clapet inférieur comprend un disque inférieur thermiquement isolant, en contact avec le fluide froid, relié à des moyens d'entraînement en rotation et présentant au moins une ouverture, cette ouverture n'étant pas en regard des moyens magnétiques, la rotation du disque inférieur étant synchrone de la rotation des moyens magnétiques.

Selon une autre caractéristique, les moyens magnétiques étant fixes, le clapet supérieur comprend un disque supérieur thermiquement isolant en contact avec le fluide chaud, présentant au moins une ouverture en regard des moyens magnétiques.

Selon une autre caractéristique, le clapet inférieur comprend un disque inférieur, thermiquement isolant, en contact avec le fluide froid et présentant au moins une ouverture, cette ouverture n'étant pas en regard des moyens magnétiques.

Selon une autre caractéristique, le clapet inférieur est constitué par un élément de substance isolante, relié à des moyens de déplacement, pour commander, en relation avec chaque aimantation ou désaimantation, soit le contact du fluide froid avec l'élément de substance paramagnétique lorsque le clapet inférieur est ouvert, soit l'interdiction de ce contact lorsque le clapet inférieur est fermé.

Selon une autre caractéristique, le clapet supérieur est constitué par un élément de substance thermiquement isolante relié à des moyens de déplacement pour commander, en relation avec chaque aimantation ou désaimantation de la substance paramagnétique, soit le contact du fluide chaud avec l'élément de substance paramagnétique lorsque le clapet supérieur est ouvert, soit l'interdiction de ce contact lorsque le clapet est fermé.

Selon une autre caractéristique, le dispositif comprend en outre des moyens d'isolation thermique entourant l'élément de substance paramagnétique sauf en regard des sources chaude et froide.

Selon une autre caractéristique, les moyens magnétiques sont constitués par des aimants supraconducteurs ou par un aimant permanent.

Les caractéristiques et avantages de l'invention ressortiront mieux de la description qui va suivre donnée en référence aux dessins annexés dans lesquels:

− la figure 1, qui a déjà été décrite représente le cycle de Carnot mis en œuvre dans le dispositif de l'invention;

− la figure 2 représente schématiquement un premier mode de réalisation du dispositif de l'invention;

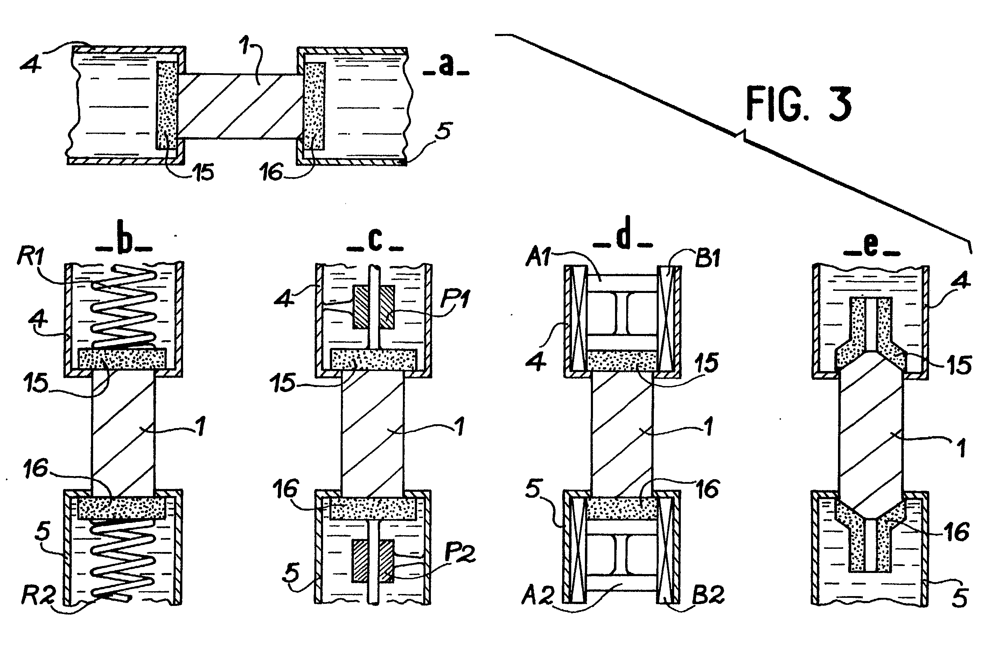

− la figure 3 représente schématiquement en a, b, c, d, e, différentes variantes du premier mode de réalisation du dispositif de la figure 2;

- la figure 4 représente schématiquement et en coupe un second mode de réalisation du dispositif de l'invention ;

- la figure 5 représente schématiquement en perspective certains des moyens utilisés dans le second mode de réalisation du dispositif ;

- la figure 6 représente schématiquement et en coupe un troisième mode de réalisation du dispositif de l'invention ;

- la figure 7 représente schématiquement en perspective certains des moyens utilisés dans le troisième mode de réalisation du dispositif.

La figure 1 a déjà été décrite pour expliquer le fonctionnement du dispositif de l'invention.

La figure 2 représente schématiquement et en coupe, un premier mode de réalisation du dispositif de l'invention. Ce dispositif comprend un élément 1 de substance paramagnétique, constituée par exemple d'un grenat de gadolinium et de gallium ; cet élément est placé entre une source chaude 2 à une température $T_1$ et une source froide 3 à une température $T_2$ ; les sources peuvent être constituées par un ou des fluides liquides ou gazeux contenus dans des réservoirs supérieur 4 et inférieur 5. Ces fluides peuvent être éventuellement des fluides cryogéniques. Le dispositif comprend aussi des moyens magnétiques 6, 7, qui peuvent être au moins une portion de tore, qui permettent de provoquer les aimantations et désaimantations définies plus haut et permettant aux sources chaude et froide, d'évoluer thermiquement selon le cycle de Carnot. Dans cet exemple, l'élément 1 de substance paramagnétique, la source froide 3 et la source chaude 2, sont disposés le long d'un même axe vertical 8, la source froide 3 étant au-dessous de l'élément 1 de substance paramagnétique et la source chaude 2 étant au-dessus de cet élément. Comme on le verra plus loin en détail, il est aussi possible de concevoir un dispositif dans lequel les sources chaude et froide ainsi que la substance paramagnétique, sont sur un même axe, mais d'orientation quelconque, par exemple horizontale. Les moyens magnétiques 6, 7, qui seront décrits plus loin en détail, sont placés au moins périodiquement, en regard de l'élément 1 de substance paramagnétique, pour créer le champ variable permettant les aimantations et désaimantations définies plus haut. Le dispositif comprend aussi des moyens d'isolation thermique, tels que des parois isolantes 9, 10, entourant l'élément 1 de substances paramagnétique, sauf en regard des sources chaude et froide. D'une manière générale, les éléments isolants thermiques utilisés dans le dispositif de l'invention peuvent être constitués par des parois d'acier inoxydable entre lesquelles règne un vide moléculaire, ou par de la fibre de verre avec une résine époxy. Le fluide à la température $T_1$, contenu dans le réservoir supérieur 4 et constituant la source chaude sera qualifié de fluide "chaud", tandis que le fluide à la température $T_2$, contenu dans le réservoir inférieur 3 et constituant la source froide, sera qualifié de fluide "froid". Les moyens magnétiques 6, 7, peuvent être réalisés de différentes façons : ces moyens peuvent être constitués respectivement par des électroaimants commandés respectivement par des générateurs 11, 12, de courants variables, pour provoquer les aimantations et désaimantations successives définies plus haut. Ces électroaimants peuvent d'ailleurs être des électroaimants de type supraconducteur. Ils occupent une position fixe en regard de l'élément 1 de substance paramagnétique. Les moyens magnétiques 6, 7, peuvent aussi être constitués respectivement par des aimants permanents ou par des bobines magnétiques à champ constant, reliées mécaniquement et respectivement, à des moyens 13, 14 qui permettent de les déplacer parallèlement à l'axe 8, de manière à provoquer les aimantations et désaimantations définies plus haut, de la substance paramagnétique 1. Ces déplacements peuvent être périodiques, de sorte que dans ce cas, les moyens magnétiques se trouvent périodiquement en regard de l'élément 1 de substance paramagnétique.

En fait, selon les moyens magnétiques choisis, l'aimantation et la désaimantation de la substance paramagnétique 1 sera provoquée, soit par un réglage des courants délivrés par les générateurs de courants 11, 12, soit par le déplacement alternatif des moyens magnétiques 6, 7 le long de l'élément 1 de substance paramagnétique.

Le dispositif comprend aussi des clapets inférieur et supérieur, situés respectivement entre la source froide 3 et l'élément de substance paramagnétique 1 et entre la source chaude 2 et l'élément de substance paramagnétique 1. Ces clapets sont fermés pendant la désaimantation et pendant l'aimantation adiabatiques ; le clapet supérieur est fermé et le clapet inférieur est ouvert, pendant la désaimantation isotherme de la substance paramagnétique, tandis que le clapet supérieur est ouvert et que le clapet inférieur est fermé, pendant l'aimantation isotherme de cette substance.

Les clapets mécaniques supérieur et inférieur sont constitués respectivement par les éléments 15, 16, de substance thermiquement isolante ; ces clapets sont capables, en position fermée, d'éviter tout contact thermique entre les fluides correspondants et l'élément 1 de substance paramagnétique ; ces éléments de substance isolante, lorsqu'ils sont placés en position "ouverte" permettent au contraire l'établissement du contact thermique entre chacun des fluides et l'élément 1 de substance paramagnétique. La fermeture des clapets constitués par les éléments 15, 16 de substance isolante revient à amener ces éléments en contact avec l'élément 1 de substance paramagnétique. Au contraire, l'ouverture de ces clapets revient à éloigner ces éléments de l'élément 1 de substance paramagnétique, pour les amener respectivement dans les positions 17 ou 18 par exemple. Pour ces positions, les fluides chaud ou froid sont en contact avec l'élément 1 de substance paramagnétique. Les éléments 15, 16 qui constituent respectivement les clapets supérieur et inférieur sont reliés respectivement à des moyens de déplacement 19, 20; ces moyens commandent l'ouverture ou la fermeture des clapets, en éloignant ou en rapprochant les éléments 15, 16 de l'élément 1 de substance paramagnétique.

La figure 3 représente schématiquement en a, b, c, d, e, quelques variantes du premier mode de réalisation du dispositif de l'invention. Les mêmes éléments portent les mêmes références sur cette figure et sur la figure 2. Sur la figure 3a, on suppose que l'élément 1 de substance paramagnétique, ainsi que les clapets 15, 16, sont disposés le long d'un même axe horizontal. On a aussi représenté sur cette figure le réservoir 4 contenant le fluide chaud et le réservoir 5 contenant le fluide froid.

Sur les figures 3b, c, d, e, on suppose que les clapets, de type mécanique, constitués par un isolant thermique, ainsi que l'élément 1 de substance paramagnétique, sont disposés le long d'un même axe vertical. En b, les moyens de guidage des clapets sont constitués par des ressorts R1, R2.

En c, ces moyens de guidage sont constitués par des axes circulant dans des paliers mécaniques P1, P2.

En d, les moyens de guidage sont constitués par un système sans frottement constitué par des aimants permanents A1, A2, circulant dans des bobines supraconductrices B1, B2.

Enfin, en e, les clapets 15, 16 dont on n'a pas représenté les moyens de guidage, sont constitués par une substance thermiquement isolante. Ces clapets ont une forme conique à leur base et sont percés d'une ouverture. Cette forme conique ainsi que cette ouverture permettent d'activer la convection à l'ébullition, du côté de la source chaude contenue dans le réservoir 4, et favorisent l'écoulement du liquide condensé du côté de la source froide contenue dans le réservoir 5.

On n'a pas représenté sur cette figure les moyens qui permettent d'ouvrir ou de fermer, les clapets, au moment voulu.

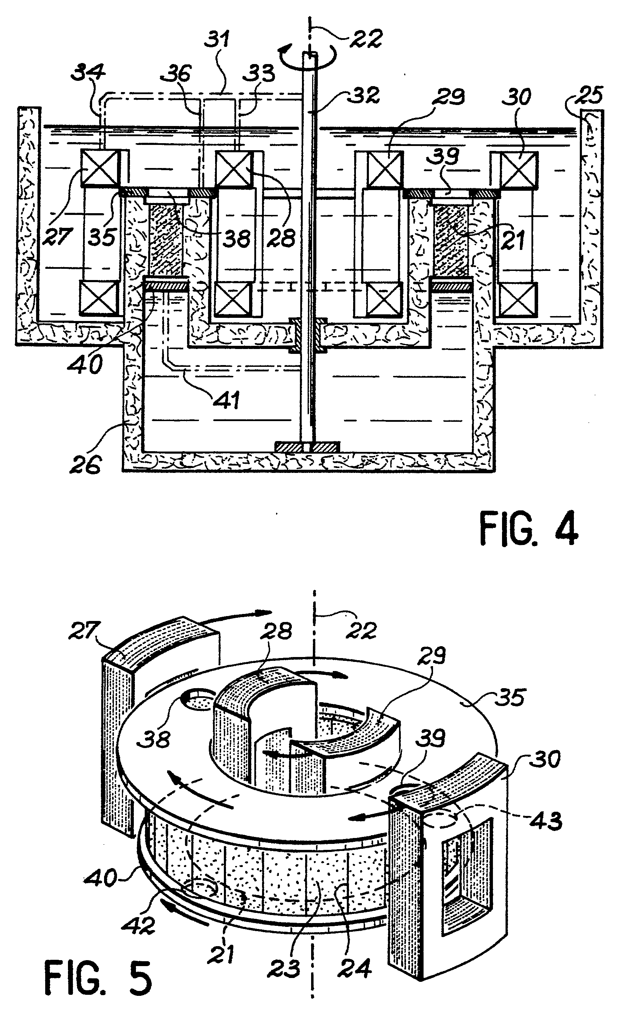

Les figures 4 et 5 représentent schématiquement une coupe transversale et en perspective d'un second mode de réalisation du dispositif de l'invention. Dans ce second mode de réalisation, l'élément de substance paramagnétique est représenté en 21 ; cet élément qui apparaît mieux sur la figure 4 a la forme d'un anneau dont l'axe est représenté en 22 ; cet anneau est constitué de tranches 23, thermiquement isolées les unes des autres par des couches 24 d'isolant thermique. Les réservoirs supérieur 25, et inférieur 26, ont une forme qui est au moins partiellement annulaire ; comme dans le mode de réalisation précédent, le fluide chaud est contenu dans le réservoir supérieur 25, tandis que le fluide froid est contenu dans le réservoir inférieur 26. Les moyens magnétiques peuvent être constitués par des bobines ou par des aimants permanents 27, 28, 29, 30 qui ne sont pas représentés ici en détail. L'élément 21 de substance paramagnétique est entouré de moyens d'isolation thermique qui peuvent être constitués, ici, par exemple, par certaines parties des parois des réservoirs 25, 26. Les sources chaude et froide sont disposées de part et d'autre de l'élément 21 de substance paramagnétique, la source chaude étant située au-dessus de cet élément et la source froide étant située au-dessous. Dans ce second mode de réalisation du dispositif de l'invention, les moyens magnétiques 27, 28, 29, 30 sont situés en regard d'au moins une partie de l'anneau 21 de substance paramagnétique, et ils sont reliés à des moyens 31 pour les entraîner en rotation autour de l'axe 22 ; ces moyens peuvent être par exemple un moteur entraînant l'arbre 32 rendu solidaire des moyens magnétiques 27, 28, 29, 30, par des tiges 31, 33, 34.

Dans ce second mode de réalisation, les clapets sont constitués par des éléments de substance thermiquement isolante, se déplaçant en regard des extrémités des tranches de substance paramagnétique qui sont ainsi en contact périodique avec les fluides chaud et froid, lorsque ces clapets sont ouverts. Dans ce second mode de réalisation, le clapet supérieur comprend donc un disque supérieur 35, thermiquement isolant, en contact avec le fluide chaud contenu dans le réservoir 25 ; ce disque est relié par une tige 36 à des moyens d'entraînement en rotation qui peuvent être les mêmes que ceux qui entraînent les moyens magnétiques 27, 28, 29, 30. Ce disque supérieur 35 présente des ouvertures 38, 39, qui sont situées en regard des moyens magnétiques 27, 28, 29, 30 et qui présentent une surface supérieure à celle de l'extrémité correspondante d'une tranche 23 de substance paramagnétique. La rotation de ce disque supérieur 35 est synchrone de la rotation des moyens magnétiques 27, 28, 29, 30. En fait, la disposition des ouvertures 38, 39 par rapport aux moyens magnétiques permet à ces ouvertures de jouer le rôle de clapet ouvert ; l'ouverture et la fermeture du clapet interviennent ainsi à un instant approprié, en relation avec l'aimantation ou la désaimantation provoquée par la rotation des moyens magnétiques, de manière que chaque tranche de substance paramagnétique de l'anneau 21 évolue thermiquement selon le cycle de Carnot décrit plus haut.

Le clapet inférieur comprend au voisinage de l'élément 21 de substance paramagnétique, un disque inférieur 40 thermiquement isolant en contact avec le fluide froid ; ce disque inférieur est relié à des moyens d'entraînement qui peuvent être par exemple constitués par l'arbre tournant 32 rendu solidaire du disque 40, par la tige 41. La rotation de ce disque est synchrone de celle des moyens magnétiques 27, 28, 29, 30 ; il comprend aussi des ouvertures 42, 43, qui ne sont pas situées en regard des moyens magnétiques. En fait, comme pour le disque supérieur, ces ouvertures jouent le rôle de clapets ouverts. Comme on l'a indiqué plus haut, le parcours du cycle de Carnot, nécessite que les clapets inférieur et supérieur soient fermés simultanément, ou que lorsque l'un des clapets est ouvert, l'autre soit fermé.

Les moyens magnétiques 27, 28, 29, 30 permettent, grâce à leur rotation, d'assurer les aimantations et désaimantations successives des différentes tranches 23 de l'anneau 21, de manière qu'en relation avec les ouvertures et fermetures des clapets décrits plus haut, le dispositif fonctionne selon le cycle de Carnot.

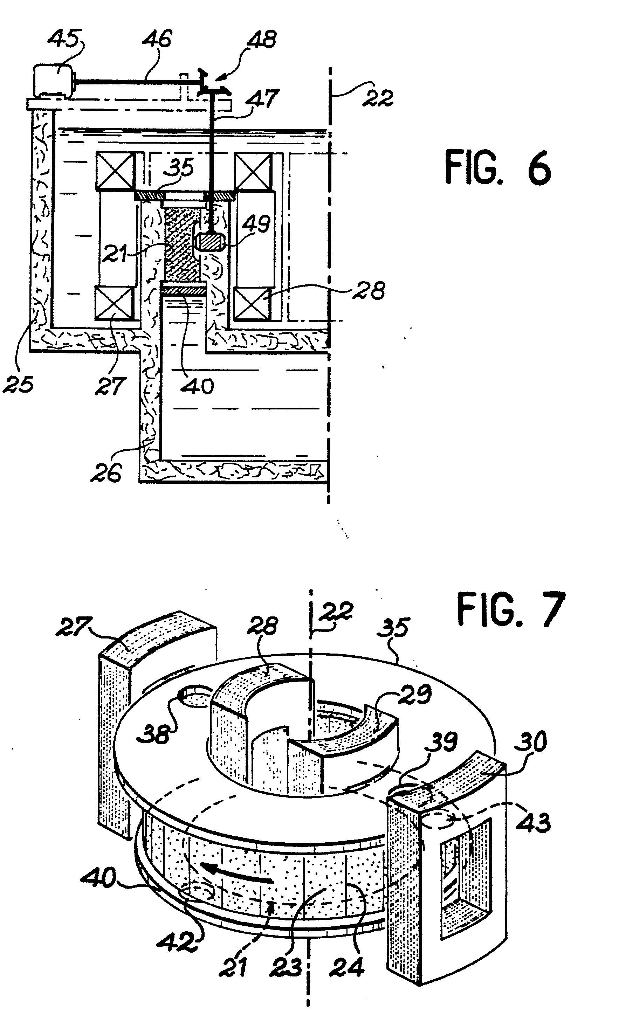

La figure 6 représente schématiquement une coupe transversale d'un troisième mode de réalisation du dispositif de l'invention.

La figure 7 représente schématiquement et en perspective, certains des éléments intervenant dans ce troisième mode de réalisation.

Sur les figures 6 et 7 ainsi que sur les figures 4 et 5, les mêmes éléments portent les mêmes références. L'élément de substance paramagnétique est représenté en 21 et, comme dans le mode de réalisation précédent, cet élément a la forme d'un anneau dont l'axe est représenté en 22. Cet anneau est constitué de tranches 23, thermiquement isolées les unes des autres par des couches 24 d'isolant thermique. Les réservoirs supérieur 25 et inférieur 26 ont une forme qui est au moins partiellement annulaire et contiennent respectivement le fluide chaud et le fluide froid constituant les sources chaude et froide. Les moyens magnétiques peuvent être constitués, comme dans le mode de réalisation précédent, par des bobines, supraconductrices par exemple, ou par des aimants permanents 27, 28, 29, 30. L'élément 21 de substance paramagnétique est entouré de myens d'isolation thermique qui peuvent être constitués ici aussi, par certaines parties des parois des réservoirs 25, 26. Les sources chaude et froide sont disposées de part et d'autre de l'élément 21 de substance paramagnétique, la source chaude étant située au-dessus de l'élément 21 et la source froide étant située en-dessous. Dans ce troisième mode de réalisation du dispositif de l'invention, les moyens magnétiques 27, 28, 29, 30 sont situés en regard d'au moins une partie de l'anneau 21 de substance paramagnétique et ici, ces moyens occupent une position fixe. Dans ce mode de réalisation, l'anneau 21 de substance paramagnétique est relié à des moyens qui permettent de l'entraîner en rotation autour de l'axe 22. Ces moyens peuvent être constitués par exemple par un moteur 45, qui, grâce aux arbres d'entraînement 46, 47 et aux pignons 48, 49, permettent d'entraîner l'anneau en rotation, à l'intérieur des parois isolantes des réservoirs 25, 26. On n'a pas représenté ici en détail les différents moyens qui permettent d'assurer l'étanchéité autour de l'anneau 21 et de supporter celui-ci au cours de sa rotation.

Les moyens magnétiques 27, 28, 29, 30 permettent d'assurer les aimantations et désaimantations successives des différentes tranches 23 de l'anneau 21, au cours de la rotation de celui-ci, de manière qu'en relation avec les ouvertures et fermetures des clapets décrits plus haut, le dispositif fonctionne selon le cycle de Carnot. Comme dans le mode de réalisation précédent, les clapets mécaniques sont constitués par des éléments de substance isolante se trouvant périodiquement en regard des extrémités des tranches 23 substance paramagnétique ; ces tranches sont ainsi en contact périodique avec les fluides chaud et froid, lorsque ces clapets sont ouverts. Dans ce troisième mode de réalisation, le clapet supérieur comprend donc un disque supérieur 35 thermiquement isolant, en contact avec le fluide chaud contenu dans le réservoir 25. Ce disque présente des ouvertures 38, 39 qui sont situées en regard des moyens magnétiques 27, 28, 29, 30 ; ces ouvertures présentent une surface voisine de celle de l'extrémité correspondante d'une tranche 23 de substance paramagnétique. La rotation de l'anneau 21 de substance paramagnétique ainsi que la disposition relative des ouvertures 38, 39 et des moyens magnétiques 27, 28, 29, 30 permettent de considérer ces ouvertures comme un clapet ouvert, alors que les autres parties du disque constituent un clapet fermé. Au cours de la rotation de l'anneau 21, il se produit des aimantations et des désaimantations successives des tranches de cet anneau ; ces aimantations et désaimantations successives, en relation avec les ouvertures et fermetures des clapets constitués par l'anneau 21 et ses ouvertures, ont pour conséquence de faire évoluer la substance paramagnétique selon le cycle de Carnot décrit plus haut. Le clapet inférieur comprend au voisinage de l'élément 21 de substance paramagnétique, un disque inférieur 40 thermiquement isolant, en contact avec le fluide froid. Ce disque ainsi que le disque supérieur, occupent une position fixe. Il comprend aussi des ouvertures 42, 43, qui ne sont pas situées en regard des moyens magnétiques. En fait, comme pour le disque supérieur, ces ouvertures jouent le rôle de clapets ouverts lors de la rotation de l'anneau 21 de substance paramagnétique. Dans ce troisième mode de réalisation, l'évolution thermique du dispositif s'effectue bien selon le cycle de Carnot puisque les clapets inférieur et supérieur sont, soit fermés simultanément, soit, lorsqu'un des clapets est ouvert, l'autre est fermé.

Il est bien évident que dans les deuxième et troisième modes de réalisation du dispositif de l'invention, les moyens d'entraînement pourraient être de types différents, en particulier, dans le deuxième mode de réalisation du dispositif, il est possible d'envisager que l'entraînement en rotation des anneaux 35, 40, s'effectue grâce aux champs magnétiques créés par les moyens 27, 28, 29, 30, eux-mêmes entraînés en rotation. Il est bien évident aussi que le nombre des bobines ou aimants permanents constituant les moyens magnétiques, a été limité à quatre, mais que ce nombre pourrait être différent. En particulier, ce nombre ainsi que celui des ouvertures présentes dans les anneaux supérieur et inférieur, pourrait être plus important, de manière à augmenter le rendement du dispositif. Il est également possible d'envisager des formes différentes pour réaliser les différentes tranches de substance paramagnétique et, en particulier, des formes permettant d'obtenir des surfaces de contact plus importantes entre l'élément de substance paramagnétique et les fluides constituant les sources chaude et froide.

On peut associer en série ou en cascade plusieurs dispositifs conformes à l'invention, de façon à couvrir une gamme plus étendue de températures.

**Revendications**

1. Dispositif de réfrigération ou de pompage de chaleur comprenant:
— un élément (1) de substance paramagnétique placé entre une source froide (3) et une source chaude (2), et présentant un axe (22),
— des moyens magnétiques (6, 7) produisant dans l'élément (1) un champ variable pour provoquer une désaimantation adiabatique de la substance paramagnétique, le champ magnétique passant d'une première valeur $H_A$ à une seconde valeur $H_B$ inférieure à la première valeur, la substance passant d'une première température $T_1$ à une seconde température $T_2$ inférieure à la première température, puis pour provoquer une désaimantation isotherme de la substance, à la seconde température $T_2$, le champ passant de la seconde valeur $H_B$ à une troisième valeur $H_C$ inférieure à la seconde valeur, puis pour aimanter adiabatiquement la substance, le champ magnétique passant de la troisième valeur $H_C$ à une quatrième valeur $H_D$ supérieure à la troisième valeur, la substance passant de la deuxième température $T_2$ à la première température $T_1$, puis pour aimanter la substance de façon isotherme à la première température $T_1$, le champ magnétique passant de la quatrième valeur $H_D$ à la première valeur $H_A$, l'élément (1) de substance paramagnétique, la source froide (3) et la source chaude (2) étant disposés le long de l'axe (22), le dispositif comportant en outre des clapets (35, 40) situés respectivement entre la source froide (3) et l'élément de substance paramagnétique, et entre la source chaude (2) et l'élément (1) de substance paramagnétique, ces clapets étant fermés pendant la désaimantation et pendant l'aimantation adiabatiques, le clapet chaud (35) étant fermé et le clapet froid (40) ouvert pendant la désaimantation isotherme de la substance, le clapet chaud (35) étant ouvert et le clapet froid (40) fermé pendant l'aimantation isotherme de la substance, caractérisé en ce que l'élément de substance paramagnétique a la forme d'un anneau (21) dont l'axe central constitue ledit axe (22) et qui est constitué de tranches (23) de substance paramagnétique thermiquement isolées les unes des autres, les moyens magnétiques (27, 28, 29, 30) étant situés en regard d'au moins une partie de l'anneau (21) de substance paramagnétique et des moyens (31, 32, 33, 34) pour produire un mouvement de rotation des moyens magnétiques autour dudit axe (22), si l'anneau occupe une position fixe, ou pour produire un mouvement de rotation de l'anneau autour dudit axe (22) si les moyens magnétiques occupent une position fixe, les clapets (35, 40) étant constitués par des éléments de substance thermiquement isolante agencés pour se trouver périodiquement en regard des extrémités des tranches (23) de substance paramagnétique de telle sorte que les tranches (23) sont ainsi en contact périodique avec la source chaude et la source froide.

2. Dispositif selon la revendication 1, caractérisé en ce que la source chaude (2) est constituée par un fluide "chaud" à la première température $T_1$, ce fluide étant contenu dans un réservoir supérieur (4) placé au-dessus de l'élément (1) de substance paramagnétique, de manière que le fluide chaud soit au contact de l'élément (1) de substance paramagnétique lorsque le clapet supérieur (15) est ouvert, et en ce que la source froide (3) est constituée par un fluide "froid" contenu dans un réservoir inférieur (5) placé en-dessous de la substance (1), de manière que le fluide froid soit au contact de l'élément (1) lorsque le clapet inférieur (16) est ouvert.

3. Dispositif selon la revendication 2, caractérisé en ce que l'anneau étant fixe, le clapet supérieur comprend un disque supérieur (35) thermiquement isolant, en contact avec le fluide chaud, relié à des moyens (32, 36) d'entraînement en rotation et présentant au moins une ouverture (38, 39) en regard des moyens magnétiques (27, 28, 29, 30), la rotation de ce disque supérieur (35) étant synchrone de la rotation des moyens magnétiques.

4. Dispositif selon la revendication 3, caractérisé en ce que le clapet inférieur comprend un disque inférieur (40) thermiquement isolant, en contact avec le fluide froid, relié à des moyens d'entraînement (32, 41) en rotation et présentant au moins une ouverture (42, 43), cette ouverture n'étant pas en regard des moyens magnétiques (27, 28, 29, 30), la rotation du disque inférieur (40) étant synchrone de la rotation des moyens magnétiques.

5. Dispositif selon la revendication 2, caractérisé en ce que les moyens magnétiques étant fixes, le clapet supérieur comprend un disque supérieur (35) thermiquement isolant en contact avec le fluid chaud, présentant au moins une ouverture (38, 39) en regard des moyens magnétiques (27, 28, 29, 30).

6. Dispositif selon la revendication 5, caractérisé en ce que le clapet inférieur comprend un disque inférieur (40), thermiquement isolant, en contact avec le fluide froid et présentant au moins une ouverture (42, 43), cette ouverture n'étant pas en regard des moyens magnétiques (27, 28, 29, 30).

7. Dispositif selon la revendication 2, caractérisé en ce que le clapet inférieur (16) est constitué par un élément de substance isolante, relié à des moyens de déplacement (20), pour commander, en relation avec chaque aimantation ou désaimantation, soit le contact du fluide froid (3) avec l'élément (1) de substance paramagnétique lorsque le clapet inférieur est ouvert, soit l'interdiction de ce contact lorsque le clapet inférieur est fermé.

8. Dispositif selon la revendication 2, caractérisé en ce que le clapet supérieur (15) est constitué par un élément de substance thermiquement isolante relié à des moyens de déplacement (19) pour commander, en relation avec chaque aimantation ou désaimantation de la substance paramagnétique, soit le contact du fluide chaud avec l'élément de substance paramagnétique (1) lorsque le clapet supérieur est ouvert, soit l'interdiction de ce contact lorsque le clapet est fermé.

9. Dispositif selon la revendication 1, caractérisé en ce qu'il comprend en outre des moyens (9, 10) d'isolation thermique entourant l'élément de substance paramagnétique sauf en regard des sources chaude et froide.

10. Dispositif selon la revendication 1, caractérisé en ce que les moyens magnétiques (6, 7) sont constitués par un aimant permanent.

11. Dispositif selon la revendication 3, caractérisé en ce que les moyens magnétiques (6, 7) sont constitués par des aimants supraconducteurs.

**Claims**

1. Refrigerating or heat-pumping device comprising:
- an element (1) of paramagnetic material, located between a cold source (3) and a hot source (2) and having an axis (22),
- magnetic means (6, 7) generating a variable field in the element (1) in order to cause adiabatic demagnetization of the paramagnetic material, the magnetic field changing from a first value $H_A$ to a second value $H_B$ below the first value, and the material changing from a first temperature $T_1$ to a second temperature $T_2$ below the first temperature, then in order to cause isothermal demagnetization of the material at the second temperature $T_2$, the field changing from the second value $H_B$ to a third value $H_C$ below the second value, then in order to magnetize the material adiabatically, the magnetic field, changing from the third value $H_C$ to a fourth value $H_D$ above the third value, the material changing from the second temperature T2 to the first temperature T1, and then in order to magnetize the material isothermally at the first temperature T1, the magnetic field changing from the fourth value HD to the first value HA, the element (1) of paramagnetic material, the cold source (3) and the hot source (2) being arranged along the axis (22), the device also possessing valves (35, 40) arranged respectively between the cold source (3) and the element of paramagnetic material and between the hot source (2) and the element (1) of paramagnetic material, these valves being closed during adiabatic demagnetization and during adiabatic magnetization, the hot valve (35) being closed and the cold valve (40) open during the isothermal demagnetization of the material, and the hot valve (35) being open and the cold valve (40) closed during the isothermal magnetization of the material, characterized in that the element of paramagnetic material has the form of a ring (21), the central axis of which forms the said axis (22) and which consists of segments (23) of paramagnetic material thermally insulated from one another, the magnetic means (27, 28, 29, 30) being located opposite at least part of the ring (21) of paramagnetic material, and of means (31, 32, 33, 34) for generating a rotational movement of the magnetic means about the said axis (22), if the ring occupies a fixed position, or for generating a rotational movement of the ring about the said axis (22), if the magnetic means occupy a fixed position, the valves (35, 40) consisting of elements of thermally insulating material which are arranged so as to be periodically opposite the ends of the segments (23) of paramagnetic material, in such a way that the segments (23) are thereby in periodic contact with the hot source and the cold source.

2. Device according to Claim 1, characterized in that the hot source (2) consists of a "hot" fluid at the first temperature T1, this fluid being contained in an upper tank (4) located above the element (1) of paramagnetic material, in such a way that the hot fluid is in contact with the element (1) of paramagnetic material when the upper valve (15) is open, and in that the cold source (3) consists of a "cold" fluid contained in a lower tank (5) located below the material (1), in such a way that the cold fluid is in contact with the element (1) when the lower valve (16) is open.

3. Device according to Claim 2, characterized in that, the ring being fixed, the upper valve comprises a thermally insulating upper disc (35) which is in contact with the hot fluid and is connected to means (32, 36) for driving in rotation and which has at least one orifice (38, 39) opposite the magnetic means (27, 28, 29, 30), the rotation of this upper disc (35) being synchronous with the rotation of the magnetic means.

4. Device according to Claim 3, characterized in that the lower valve comprises a thermally insulating lower disc (40) which is in contact with the cold fluid and is connected to means (32, 41) for driving in rotation and which has at least one orifice (42, 43), this orifice not being opposite the magnetic means (27, 28, 29, 30), the rotation of the lower disc (40) being synchronous with the rotation of the magnetic means.

5. Device according to Claim 2, characterized in that, the magnetic means being fixed, the upper valve comprises a thermally insulating upper disc (35) which is in contact with the hot fluid and which has at least one orifice (38, 39) opposite the magnetic means (27, 28, 29, 30).

6. Device according to Claim 5, characterized in that the lower valve comprises a thermally insulating lower disc (40) which is in contact with the cold fluid and which has at least one orifice (42, 43), this orifice not being opposite the magnetic means (27, 28, 29, 30).

7. Device according to Claim 2, characterized in that the lower valve (16) consists of an element of insulating material, connected to means of movement (20), in order to effect, in respect of each magnetization or demagnetization, either the contact of the cold fluid (3) with the element (1) of paramagnetic material when the lower valve is open or the prevention of this contact when the lower valve is closed.

8. Device according to Claim 2, characterized in that the upper valve (15) consists of an element of thermally insulating material, connected to means of movement (19), in order to effect, in respect of each magnetization or demagnetization, either the contact of the hot fluid with the element of paramagnetic material (1) when the upper valve is open or the prevention of this contact when the valve is closed.

9. Device according to Claim 1, characterized in that it also possesses means (9, 10) of thermal insulation which surround the element of paramagnetic material, except opposite the hot and cold sources.

10. Device according to Claim 1, characterized in that the magnetic means (6, 7) consist of a permanent magnet.

11. Device according to Claim 3, characterized in that the magnetic means (6, 7) consist of super conductive magnets.

**Patentansprüche**

1. Kühl- oder Wärmepumpvorrichtung, enthaltend:
– ein Element (1) aus einer paramagnetischen Substanz, das zwischen einer Kältequelle (3) und einer Wärmequelle (2) angeordnet ist und eine Achse (22) aufweist,
– magnetische Einrichtungen (6, 7), die in dem Element (1) ein variables Feld erzeugen, um eine adiabatische Entmagnetisierung der paramagnetischen Substanz hervorzurufen, wobei das Magnetfeld von einem ersten Wert HA auf einen zweiten Wert HB übergeht, der niedriger als der erste Wert ist, die Substanz von einer ersten Temperatur T1 auf eine zweite Temperatur T2 übergeht, die niedriger als die erste Temperatur ist, dann um eine isothermische Entmagnetisierung der Substanz bei der zweiten Temperatur T2 hervorzurufen, wobei das Feld von dem zweiten Wert HB auf einen dritten Wert HC übergeht, der niedriger als der zweite Wert ist, um dann die Substanz adiabatisch zu magnetisieren, wobei das Magnetfeld von dem dritten Wert HC auf

einen vierten Wert $H_D$ übergeht, der größer als der dritte Wert ist, die Substanz von der zweiten Temperatur $T_2$ auf die erste Temperatur $T_1$ übergeht, um dann die Substanz isothermisch bei der ersten Temperatur $T_1$ zu magnetisieren, wobei das Magnetfeld vom vierten Wert $H_D$ auf den ersten Wert $H_A$ übergeht, wobei das Element (1) aus der paramagnetischen Substanz, die Kältequelle (3) und die Wärmequelle (2) längs der Achse (22) angeordnet sind, die Vorrichtung weiterhin Ventile (35, 40) aufweist, die jeweils zwischen der Kältequelle (3) und dem Element aus der paramagnetischen Substanz und zwischen der Wärmequelle (2) und dem Element (1) aus der paramagnetischen Substanz gelegen sind, welche Ventile während der adiabatischen Entmagnetisierung und der adiabatischen Magnetisierung geschlossen sind, wobei während der isothermen Entmagnetisierung der Substanz das warme Ventil (35) geschlossen und das kalte Ventil (40) geöffnet ist und während der isothermen Magnetisierung der Substanz das warme Ventil (35) geöffnet und das kalte Ventil (40) geschlossen ist, dadurch gekennzeichnet, daß das Element aus der paramagnetischen Substanz die Form eines Rings (21) hat, dessen Mittenachse die genannte Achse (22) bildet und das von Scheiben (23) aus paramagnetischer Substanz gebildet ist, die thermisch voneinander isoliert sind, wobei die magnetischen Einrichtungen (27, 28, 29, 30) wenigstens einem Teil des Rings (21) aus der paramagnetischen Substanz gegenüberliegend angeordnet sind, und mit Einrichtungen (31, 32, 33, 34) zum Erzeugen einer Drehbewegung der magnetischen Einrichtungen um die genannte Achse (22), wenn der Ring eine feste Position einnimmt, oder um eine Drehbewegung des Rings um die genannte Achse (22) zu erzeugen, wenn die magnetischen Einrichtungen eine feste Position einnehmen, wobei die Ventile (35, 40) durch Elemente aus thermisch isolierender Substanz gebildet sind, die so betrieben sind, daß sie periodisch den Enden der Scheiben (23) aus paramagnetischer Substanz gegenüberstehen, so daß die Scheiben (23) so periodisch mit der Kältequelle und der Wärmequelle in Berührung sind.

2. Vorrichtung nach Anspruch 1, dadurch gekennzeichnet, daß die Wärmequelle (2) von einem "warmen" Fluid mit der ersten Temperatur $T_1$ gebildet ist, wobei dieses Fluid in einem oberen Behälter (4) enthalten ist, der über dem Element (1) aus paramagnetischer Substanz angeordnet ist, so daß das warme Fluid mit dem Element (1) aus paramagnetischer Substanz in Berührung ist, wenn das obere Ventil (15) offen ist, und daß die Kältequelle (3) von einem "kalten" Fluid gebildet ist, das in einem unteren Behälter (5) enthalten ist, der unterhalb der Substanz (1) angeordnet ist, so daß das kalte Fluid mit dem Element (1) in Kontakt ist, wenn das untere Ventil (16) offen ist.

3. Vorrichtung nach Anspruch 2, dadurch gekennzeichnet, daß bei festem Ring das obere Ventil eine thermisch isolierende obere Scheibe (35) enthält, die mit dem warmen Fluid in Berührung ist, mit Einrichtungen (32, 36) für einen Drehantrieb verbunden ist und wenigstens eine Öffnung (38, 39) gegenüber den magnetischen Einrichtungen (27, 28, 29, 30) aufweist, wobei die Drehung dieser oberen Scheibe (35) synchron mit der Drehung der magnetischen Einrichtungen ist.

4. Vorrichtung nach Anspruch 3, dadurch gekennzeichnet, daß das untere Ventil eine thermisch isolierende untere Scheibe (4) enthält, die mit dem kalten Fluid in Berührung ist, mit Drehantriebseinrichtungen (32, 41) verbunden ist und wenigstens eine Öffnung (42, 43) aufweist, die den magnetischen Einrichtungen (27, 28, 29, 30) nicht gegenübersteht, wobei die Drehung der unteren Scheibe (40) synchron mit der Drehung der magnetischen Einrichtungen ist.

5. Vorrichtung nach Anspruch 2, dadurch gekennzeichnet, daß bei feststehenden magnetischen Einrichtungen das obere Ventil eine thermisch isolierende Scheibe (35) enthält, die mit dem warmen Fluid in Berührung ist und wenigstens eine Öffnung (38, 39) gegenüber den magnetischen Einrichtungen (27, 28, 29, 30) aufweist.

6. Vorrichtung nach Anspruch 5, dadurch gekennzeichnet, daß das untere Ventil eine thermisch isolierende untere Scheibe (40) enthält, die mit dem kalten Fluid in Berührung ist und wenigstens eine Öffnung (42, 43) aufweist, die den magnetischen Einrichtungen (27, 28, 29, 30) nicht gegenübersteht.

7. Vorrichtung nach Anspruch 2, dadurch gekennzeichnet, daß das untere Ventil (16) von einem Element aus isolierender Substanz gebildet ist und mit Verstelleinrichtungen (20) verbunden ist, um in bezug auf jede Magnetisierung oder Entmagnetisierung entweder die Berührung des kalten Fluides (3) mit dem Element (1) aus paramagnetischer Substanz, wenn das untere Ventil geöffnet ist, oder die Unterbindung dieser Berührung, wenn das untere Ventil geschlossen ist, zu steuern.

8. Vorrichtung nach Anspruch 2, dadurch gekennzeichnet, daß das obere Ventil (15) von einem Element aus thermisch isolierender Substanz gebildet ist, das mit Verstelleinrichtungen (19) verbunden ist, um in bezug auf jede Magnetisierung oder Entmagnetisierung der paramagnetischen Substanz entweder die Berührung des warmen Fluides mit dem Element (1) aus paramagnetischer Substanz, wenn das obere Ventil geöffnet ist, oder die Unterbindung dieser Berührung, wenn das Ventil geschlossen ist, zu steuern.

9. Vorrichtung nach Anspruch 1, dadurch gekennzeichnet, daß sie darüber hinaus Einrichtungen (9, 10) zur thermischen Isolierung enthält, die das Element aus paramagnetischer Substanz mit Ausnahme gegenüber den Wärme- und Kältequellen umgeben.

10. Vorrichtung nach Anspruch 1, dadurch gekennzeichnet, daß die magnetischen Einrichtungen (6, 7) von einem Permanentmagneten gebildet sind.

11. Vorrichtung nach Anspruch 3, dadurch gekennzeichnet, daß die magnetischen Einrichtungen (6, 7) von Supraleiter-Magneten gebildet sind.

EP 0 187 078 B1

FIG. 1

FIG. 2

FIG. 3

FIG. 4

FIG. 5

EP 0 187 078 B1

FIG. 6

FIG. 7